# DEMANDE DE BREVET EUROPEEN

(11) **EP 1 151 716 A1**
(43) Date de publication de la demande: **07.11.2001**
(21) Numéro de dépôt: 01480030.4
(22) Date de dépôt: 26.04.2001
(51) Int. Cl.: A47L 13/16

(54) **Dispositif multi-usage ménagers absorbant et asséchant**

(30) Priorité: 03.05.2000 FR 0005608
(71) Demandeur: Doubet, Philippe, 06110 Le Cannet (FR)
(72) Inventeur: Doubet, Philippe, 06110 Le Cannet (FR)
(74) Mandataire: Bonneau, Gérard

(57) **Abrégé**

La présente invention concerne un dispositif (10) ménager d'essuyage multicouches comprenant au moins une couche interne (12) et au moins une couche externe de chaque côté de ladite couche interne (14, 16). La couche interne, dite couche absorbante, est hydrophile et présente une densité faible, alors que les couches externes, dites couches asséchantes, sont perméables, plus denses mais moins hydrophiles que la couche interne, de sorte que le dispositif a le pouvoir d'absorber un liquide grâce à la couche absorbante et d'assécher simultanément la surface sur laquelle se trouve le liquide, grâce à l'une des couches asséchantes.

## Description

La présente invention concerne les dispositifs de nettoyage et d'essuyage à usage ménager et plus particulièrement un dispositif jetable multi-usages, absorbant et asséchant.

Il existe sur le marché différents dispositifs à usage ménager pour le nettoyage ou l'essuyage de surfaces ou d'objets. Le plus classique est l'éponge. Cette dernière est largement utilisée depuis des décennies, que ce soit pour un usage ménager ou pour l'hygiène corporelle. Le principal avantage de l'éponge est sa capacité d'absorption. En effet, une éponge est capable d'absorber une grande quantité de liquide. C'est ce qui en fait l'accessoire le plus utilisé par les ménagères, pour nettoyer les surfaces ou pour absorber les liquides. Cependant, l'éponge ne sèche pas les surfaces, lorsqu'elle est humide ou imbibée d'eau. Ce qui implique d'utiliser un autre accessoire pour sécher la surface, ou de laisser celle-ci sécher naturellement.

Parmi les autres dispositifs ménagers largement utilisés, l'essuie-tout est devenu de nos jours, incontournable. Il est très pratique pour nettoyer les surfaces à l'aide d'un produit ou pour sécher les surfaces quand une pellicule de liquide subsiste. Un autre avantage est qu'il est jetable et donc, contrairement à l'éponge, est souvent à usage unique. Cette caractéristique le rend beaucoup plus hygiénique qu'une éponge qui, à force d'être humide, facilite le développement de germes et notamment de moisissures. Cependant, un inconvénient majeur est qu'il ne possède qu'une très faible capacité d'absorption de liquide. Un autre inconvénient majeur de l'essuie-tout ménager est qu'il possède une très faible résistance mécanique. En effet, une fois humidifié, il se déchire très facilement, ce qui limite son intérêt, lorsqu'on veut en faire une utilisation prolongée.

Le but de l'invention est donc de pallier ces inconvénients en fournissant un dispositif ménager multi-usages pouvant être utilisé une seule fois, qui possède à la fois une bonne capacité d'absorption des liquides, un bon pouvoir asséchant et une bonne résistance à la déchirure.

La présente invention concerne donc un dispositif ménager d'essuyage multicouches comprenant au moins une couche interne et au moins une couche externe de chaque côté de ladite couche interne. La couche interne, dite couche absorbante, est hydrophile et présente une densité faible, alors que les couches externes, dites couches asséchantes, sont perméables, plus denses mais moins hydrophiles que la couche interne, de sorte que le dispositif a le pouvoir d'absorber un liquide grâce à la couche absorbante et d'assécher simultanément la surface sur laquelle se trouve le liquide, grâce à l'une couches asséchantes.

Les buts, objets et caractéristiques de l'invention ressortiront mieux à la lecture de la description qui suit, faite en référence aux dessins joints dans lesquels :
La figure 1 représente une vue en coupe du dispositif ménager multi-usages, après assemblage des couches.
La figure 2 représente une vue en coupe du dispositif ménager multi-usages après l'étape de gaufrage.

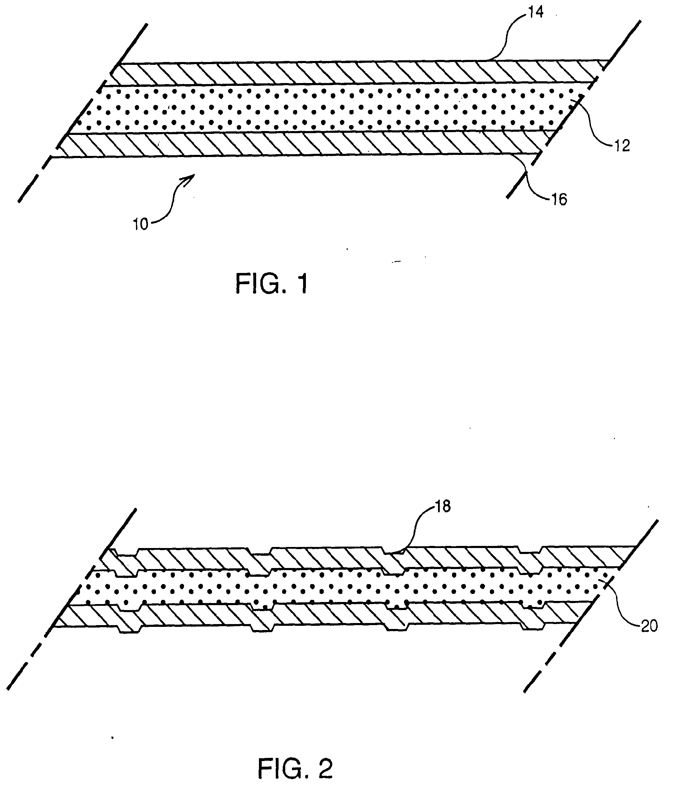

Selon la figure 1, le dispositif 10 selon l'invention est constitué d'une couche absorbante 12 et de deux couches asséchantes 14 et 16 entourant la couche absorbante 12. Cette couche absorbante, très hydrophile, est préférentiellement en matière fibreuse. En effet, il peut s'agir de fibres textiles ou de fibres de cellulose. Selon un mode de réalisation particulier, ces fibres sont des fibres de cellulose non tissées. Ces fibres sont projetées sur une surface plane, de façon aléatoire. Elles sont ensuite liées entre elles par ajout de fibres thermofusibles ou d'un liant. Il peut s'agir notamment d'une colle à base de latex. L'ensemble est ensuite mis dans un four à air chaud afin de coller les fibres et de former la couche absorbante. Cette capacité d'absorption s'explique également par le fait que le liquide se diffuse très facilement sur toute la surface de la couche absorbante.

Selon un autre mode particulier, la couche absorbante est en fibres textiles. Il s'agit alors préférentiellement de fibres de viscose et/ou de polyester. La couche absorbante est alors obtenue par le même procédé que la couche absorbante constituée de fibres de cellulose.

Les deux couches asséchantes 14 et 16, disposées de chaque côté de la couche absorbante 12, sont moins hydrophiles et plus denses que cette dernière. Elles sont également perméables pour permettre au liquide de diffuser vers la couche absorbante. Ces couches sont préférentiellement en fibres de cellulose, non tissées. La préparation de ces couches consiste à mélanger les fibres de cellulose à de l'eau et à un liant, tel que de la colle acrylique. Ce mélange liquide est ensuite pulvérisé sur une surface plane de façon à ce que les fibres de cellulose soient disposées aléatoirement. Le tout est ensuite séché dans une étuve et forme ainsi la couche asséchante. Le séchage à l'étuve permet de conférer à la couche asséchante une certaine souplesse. Contrairement à la couche absorbante, le liquide se diffuse peu dans les couches asséchantes. Cette caractéristique fait que ces couches ne s'humidifient qu'à l'endroit où le liquide est absorbé. Ce liquide étant ensuite capté par la couche absorbante, la ou les couches asséchantes ne sont quasiment plus humides. Elles peuvent alors jouer le rôle asséchant.

Selon un mode de réalisation particulier, la couche interne de matière absorbante 12 et les couches externes asséchantes 14 et 16 sont solidarisées par le dépôt d'un voile de colle (non visible sur la figure) sur chaque face de la couche interne 12, préalablement au dépôt des couches 14 et 16. Les différentes couches sont alors collées en masse sur toute leur surface.

Selon un mode de réalisation particulier, le dispositif subit ensuite une étape de gaufrage. La figure 2 représente le dispositif en coupe, après cette étape de gaufrage. Durant cette étape, l'ensemble constitué par les trois couches est compressé entre deux cylindres en rotation. Un des cylindres, dit cylindre d'estampage, marque par des empreintes 18 le dispositif, lorsque celui-ci passe entre les cylindres. Ce procédé permet d'augmenter la cohésion entre les couches. Un autre résultat de ce gaufrage est que la couche interne 20 est compressée. Cette compression permet d'augmenter la capacité d'absorption du dispositif. En effet, la couche absorbante possède à l'origine une capacité d'absorption de 400 grammes (g) de liquide par mètre carré (m²). Après l'étape de gaufrage, cette capacité augmente jusqu'à 700 g de liquide par m².

Selon un mode préféré de réalisation, la couche interne absorbante possède un grammage de 40 grammes par mètre carré (g/m²). Les couches externes asséchantes possèdent chacune un grammage de 15 g/m².

Le dispositif selon l'invention possède donc des caractéristiques d'absorption importantes. En effet, un tel dispositif possède une capacité d'absorption trois fois plus importante que celle de l'essuie-tout ménager.

Il possède également des caractéristiques de résistance mécanique notables. En effet, il est deux fois plus résistant que l'essuie-tout ménager.

Un tel dispositif peut avoir le même rôle que l'essuie-tout ménager. A cette fin, il peut se présenter sous forme de feuilles prédécoupées, conditionnées en rouleaux.

Comme l'essuie-tout ménager, c'est un produit à usage unique. Il peut être utilisé à la fois pour absorber un liquide et/ou pour sécher une surface. Ainsi, il peut remplacer une éponge ou tout accessoire équivalent.

Dans un autre mode de réalisation, le dispositif selon l'invention peut se présenter sous forme de lingette. Dans cette configuration, le dispositif selon l'invention peut servir d'essuie-mains ou encore peut être utilisé pour sécher la vaisselle ou tout objet qui a été mouillé. En effet, son fort pouvoir absorbant et séchant permet d'obtenir des objets totalement secs.

Un des avantages importants par rapport aux linges classiques en tissu est qu'il est jetable. Un linge est souvent utilisé plusieurs fois avant d'être lavé. Ainsi, il est souvent humide ou souillé, ce qui n'est pas très hygiénique. Le dispositif selon l'invention, s'il est souillé, peut être changé rapidement. Au contraire, sa grande résistance mécanique fait que s'il n'est pas souillé ou s'il est peu humide, il peut être réutilisé. Ces propriétés lui donnent donc une grande facilité et une grande liberté d'utilisation.

## Revendications

1. Dispositif ménager d'essuyage multicouche comprenant au moins une couche interne et au moins une couche externe de chaque côté de ladite couche interne, **caractérisé en ce que** la couche interne, dite couche absorbante, est hydrophile et présente une densité faible, alors que les couches externes, dites couches asséchantes, sont perméables, plus denses mais moins hydrophiles que la couche interne, de sorte que ledit dispositif a le pouvoir d'absorber un liquide grâce à ladite couche absorbante et d'assécher simultanément la surface sur laquelle se trouve le liquide, grâce à l'une desdites couches asséchantes, lesdites couches absorbante et asséchantes étant solidarisées par collage.

2. Dispositif ménager d'essuyage selon la revendication 1, dans lequel la couche absorbante est en matière fibreuse, notamment en fibres textiles ou en fibres de cellulose.

3. Dispositif ménager d'essuyage selon l'une des revendications précédentes, dans lequel ladite couche asséchante est en matière fibreuse, notamment en fibres de cellulose.

4. Dispositif ménager d'essuyage selon l'une des revendications 2 ou 3, dans lequel lesdites fibres de ladite couche absorbante sont disposées de façon aléatoire et liées entre elles par des fibres thermofusibles ou un liant, l'ensemble ayant été séché dans un four à air chaud.

5. Dispositif ménager d'essuyage selon l'une des revendications 2 ou 3, dans lequel lesdites couches asséchantes sont constituées de fibres de cellulose disposées aléatoirement et mélangées à de l'eau et à un liant tel que de la colle acrylique, l'ensemble ayant été séché dans une étuve de façon à conférer auxdites couches asséchantes une certaine souplesse.

6. Dispositif ménager d'essuyage selon l'une des revendications précédentes, dans lequel lesdites couches sont solidarisées au moyen d'un voile de colle très fin.

7. Dispositif ménager d'essuyage selon l'une des revendications précédentes, dans lequel lesdites couches sont gaufrées, ce qui permet d'augmenter leur cohésion et de compresser la couche absorbante afin d'augmenter son pouvoir d'absorption.

8. Dispositif ménager selon l'une des revendications précédentes, **caractérisé en ce qu'**il se présente sous forme de feuilles prédécoupées conditionnées en rouleaux.

9. Dispositif ménager selon l'une des revendications précédentes, dans lequel ladite couche absorbante possède un grammage de 40 grammes par mètre carré.

10. Dispositif ménager selon l'une des revendications précédentes, dans lequel lesdites couches asséchantes possèdent chacune un grammage de 15 grammes par mètre carré.
